# EUROPEAN PATENT APPLICATION

(11) **EP 4 277 181 A2**
(43) Date of publication of application: **15.11.2023**
(21) Application number: 23200114.9
(22) Date of filing: 06.04.2021
(51) Int. Cl.: H04L 1/18

(54) **PRIORITIZATION OF UPLINK AND SIDELINK TRANSMISSIONS**

(30) Priority: 07.04.2020 WO PCT/CN2020/083604
(62) Divisional of application: 21785210.2
(71) Applicant: Apple Inc., Cupertino, CA 95014 (US)
(72) Inventor: YE, Chunxuan, San Diego, California, 92131 (US); ZHANG, Dawei, Cupertino, California, 95014 (US); HU, Haijing, Cupertino, California, 95014 (US); SUN, Haitong, Cupertino, California, 95014 (US); OTERI, Oghenekome, San Diego, California, 92131 (US); ZENG, Wei, Cupertino, California, 95014 (US); YANG, Weidong, San Diego, California, 92131 (US); CHEN, Yuqin, Beijing, 100022 (CN); WU, ZHibin, Cupertino, California, 95014 (US)
(74) Representative: Simmons & Simmons

(57) **Abstract**

Determining priority of a simultaneous sidelink (SL) transmission and uplink (UL) transmission of a user equipment (UE) within a 5G New Radio (NR) network may comprise processing an SL control information (SCI) corresponding to at least one of a SL hybrid automatic repeat request (HARQ) or an SL schedule request (SR) included in a UL transmission to be sent by a UE to thereby determine a priority value associated with the at least one SL HARQ or SL SR. An SCI of an SL transmission to be sent by the UE simultaneously with the UL transmission may be processed to thereby determine a priority value associated with the SL transmission. The priority value of the at least one SL HARQ or SL SR may be compared to the priority value of the SL transmission. Transmissions may then be prioritized based on the comparison of priority values.

## Description

### TECHNICAL FIELD

This application relates generally to wireless communication systems, and more specifically to vehicle-to-everything (V2X) prioritization between sidelink (SL) and uplink (UL) transmission (Tx).

### BACKGROUND

Wireless mobile communication technology uses various standards and protocols to transmit data between a base station and a wireless mobile device. Wireless communication system standards and protocols can include the 3rd Generation Partnership Project (3GPP) long term evolution (LTE) (e.g., 4G) or new radio (NR) (e.g., 5G); the Institute of Electrical and Electronics Engineers (IEEE) 802.16 standard, which is commonly known to industry groups as worldwide interoperability for microwave access (WiMAX); and the IEEE 802.11 standard for wireless local area networks (WLAN), which is commonly known to industry groups as Wi-Fi. In 3GPP radio access networks (RANs) in LTE systems, the base station can include a RAN Node such as a Evolved Universal Terrestrial Radio Access Network (E-UTRAN) Node B (also commonly denoted as evolved Node B, enhanced Node B, eNodeB, or eNB) and/or Radio Network Controller (RNC) in an E-UTRAN, which communicate with a wireless communication device, known as user equipment (UE). In fifth generation (5G) wireless RANs, RAN Nodes can include a 5G Node, NR node or g Node B (gNB).

RANs use a radio access technology (RAT) to communicate between the RAN Node and UE. RANs can include global system for mobile communications (GSM), enhanced data rates for GSM evolution (EDGE) RAN (GERAN), Universal Terrestrial Radio Access Network (UTRAN), and/or E-UTRAN, which provide access to communication services through a core network. Each of the RANs operates according to a specific 3GPP RAT. For example, the GERAN implements GSM and/or EDGE RAT, the UTRAN implements universal mobile telecommunication system (UMTS) RAT or other 3GPP RAT, and the E-UTRAN implements LTE RAT.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an LTE V2X prioritization scheme at physical layer in accordance with one embodiment.
FIG. 2 illustrates an NR V2X prioritization scheme between SL data and UL data in accordance with one embodiment.
FIG. 3 illustrates a procedure of prioritization between sidelink and uplink in accordance with one embodiment.
FIG. 4 illustrates a method in accordance with one embodiment.
FIG. 5 illustrates a method in accordance with one embodiment.
FIG. 6 illustrates a method in accordance with one embodiment.
FIG. 7 illustrates an example service based architecture in accordance with certain embodiments.
FIG. 8 illustrates a UE in accordance with one embodiment.
FIG. 9 illustrates a network node in accordance with one embodiment.

### DETAILED DESCRIPTION

User equipment (UE) can support both sidelink (SL) transmissions and uplink (UL) transmissions. SL transmissions may be on the same carrier or a different carrier than UL transmissions. At times, time overlap may occur between SL transmissions and UL transmissions. Due to any given UE's total transmit power limit, the UE may not be able to provide the original transmit power of its SL transmissions and UL transmissions.

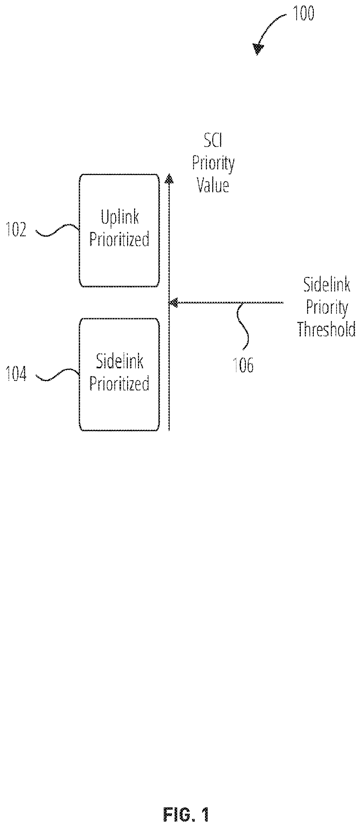

Accordingly, a power reduction scheme for different carriers and a transmission dropping scheme for the same carrier may be beneficial. The power reduction or transmission dropping may be applied on a transmission (e.g., SL or UL) with lower priority. Hence, the prioritization between SL and UL is needed. Figure 1 illustrates a visual representation of a LTE V2X prioritization scheme 100, which demonstrates prioritization of sidelink (SL) transmissions versus uplink (UL) transmissions. As illustrated in part by blocks 102 and 104 and SL priority threshold 106, when an SL control information (SCI) priority value is higher than a corresponding SL priority threshold, a simultaneous UL transmission will be prioritized (i.e., lower priority value shows higher priority), as further described herein. As such, when the SCI priority value is lower than the corresponding SL priority threshold, the SL transmission will be prioritized over the simultaneous UL transmission, as further described herein.

More particularly, in LTE V2X physical layer, if an SL transmission and a UL transmission are on the same carrier and the value in the "priority" field of the SCI corresponding to the SL transmission is smaller than a high layer parameter *"thresSL-TxPrioritization",* then the UL transmission is dropped. Otherwise, the SL transmission is dropped. Notably, the lower a value is in the "priority" field of an SCI, the higher the priority of corresponding SL data and conversely, the higher a value is in the "priority" field of an SCI, the lower the priority of the corresponding SL data.

In LTE V2X physical layer, if an SL transmission and a UL transmission are on different carriers and the value in "priority" field of the SCI corresponding to the SL transmission is smaller than a high layer parameter *"thresSL-TxPrioritization",* then UL transmission power is adjusted such that the total UE transmit power does not exceed P_{CMAX}. Otherwise, SL transmit power is adjusted such that the total UE transmit power does not exceed P_{CMAX}.

In LTE V2X physical layer, the prioritization of SL and UL is based on SL data priority in SCI. Accordingly, UL data priority is not considered in determining such priority (UL data priority is not available at physical layer).

Notably, according to the New Radio (NR) V2X Release 16 agreement, for power limited cases in supporting simultaneous SL and UL transmissions when the SL carrier is different from the UL carrier, if an SL transmission is prioritized over a UL transmission, the UE can adjust the UL transmission power before the start of the transmission such that its total transmission power does not exceed *P_{CMAX}* on any overlapped portion. In this case, calculation of the adjustment to the UL transmission power is not specified. If UL transmission is prioritized over SL transmission in such a case, the UE can adjust the SL transmission power before the start of the transmission such that its total transmission power does not exceed *P_{CMAX}* on any overlapped portion. In this case, calculation of the adjustment to the SL transmission power is not specified.

In addition, total SL transmit power is the same in the symbols used for actual PSCCH/PSSCH transmissions in a slot in case of simultaneous transmission of SL and UL. PSCCH/PSSCH transmissions can be dropped in some symbols when there are uplink transmissions with higher priority and the UE cannot keep the same SL transmission power in the symbols. Selection of the dropped symbols is up to UE implementation where the dropped symbols may include the overlapping symbols.

If the simultaneous transmission of SL and UL is beyond a UE's capabilities, the one not prioritized can be dropped. Whether/how to address RF transient period is up to RAN4. Notably, when to prioritize which transmission, how to address UE processing time, and whether there is a case of dropping some symbols of uplink transmissions are issues that may be studied further.

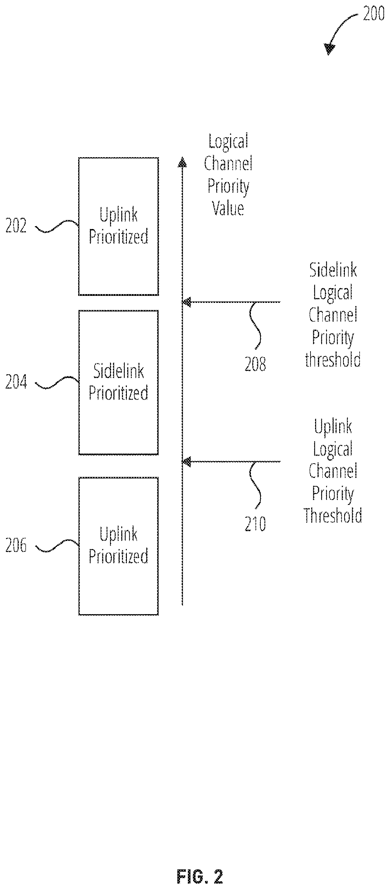

Figure 2 illustrates a visual representation of an NR V2X prioritization scheme 200, which demonstrates prioritization of SL transmissions versus UL transmissions at the MAC layer as described in the NR V2X RAN 2 agreement. As illustrated in part by blocks 202 through 206 and priority thresholds 208 and 210, the prioritization of SL and UL is based on logical channel priority of both SL data and UL data/SR. In particular, between SL-data and UL-data/SRB (signaling radio bearer): the SL transmission is prioritized if the highest priority value of UL LCH(s) with available data is larger than the UL priority threshold and the highest priority value of SL LCH(s) with available data is lower than the SL priority threshold. Otherwise, the UL transmission is prioritized. Accordingly, the lower the value of a logical channel priority, the higher the priority of data, and conversely, the higher the value of a logical channel priority, the lower the priority of data.

The following prioritization rules also apply: between SL-data and UL-SR: the UL-SR priority is based on the UL LCH which triggered the UL SR; between SL-data and SL-SR (over uplink channel): priority is based on direct comparison between associated LCH priority; between SL-data and UL-TX on PUSCH for MAC CE, the LTE solution is reused; and Msg 1/3 for RACH procedure and PUSCH for emergency PDU. connection are always prioritized over SL transmissions.

Notably, in NR V2X Release 16, the following agreements have been made in RAN 1: no support of multiplexing of SL hybrid automatic repeat (HARQ) and radio interface (Uu) UL control information (UCI) on PUCCH or PUSCH (it is open what a UE should do if the SL HARQ report to gNB has time overlap with Uu UCI); and SL HARQ-ACK is reported in PUSCH when reporting in PUCCH overlaps with a PUSCH transmission (the Rel-15 procedures and signaling for multiplexing DL HARQ-ACKs in PUSCH are reutilized).

The principles described herein provide solutions to a number of issues, including 1. How to determine the priority between SL transmissions and UL transmissions, which includes the specific priority level for certain SL transmissions, whether reuse of UL-SL prioritization made in NR V2X RAN2 for uplink transmission with available priority information or reuse of LTE V2X prioritization between SL transmission and UL transmission can be made (notably, NR V2X RAN2 considers the data logical channel priority; NR V2X RAN2 does not consider the physical layer priority information; and NR V2X RAN2 does not consider the UL transmission containing SL HARQ or SL SR); 2. How to prioritize uplink transmissions containing SL HARQ and Uu UCI (notably, if UL transmission for SL HARQ report to gNB has time overlap with Uu UCI, then one of them has to be dropped since multiplexing is not supported and dropping depends on the prioritization between UL transmission for SL HARQ and Uu UCI); 3. How to multiplex SL HARQ report to gNB with UL data (notably, it is allowed for SL HARQ report to gNB to be transmitted on PUSCH together with UL data transmission, so whether that should apply to all UL data is also answered by the principles described herein); and 4. How to prioritize SL grants in Mode 1 from gNB. Notably, in Mode 1 resource allocation, SL grant can be dynamic grant, type 1 configured grant and type 2 configured grant and multiple type 1 or type 2 configured grants are supported.

Regarding the first issue, the following procedure describes the prioritization between SL transmission and UL transmission: 1. If uplink transmission is PRACH or PUSCH scheduled by RAR UL grant, UL transmission is prioritized; 2. If uplink transmission contains URLLC traffic, then UL transmission is prioritized (the "priority indicator" field in scheduling/grant DCI (format 1_1, 1_2, 0_1, 0_2) is equal to 1 or the uplink configured grant configuration, then the corresponding DL HARQ feedback, CSI or SRS, uplink data are considered as URLLC traffic and UL transmission may or may not contain SL HARQ or SL SR); 3. If uplink transmission contains SL HARQ or SL SR, and the "priority" value of SL HARQ/SR is lower than the "priority" level in the SCI of SL transmissions, then UL transmission is prioritized ("priority" value of SL HARQ is equal to the "priority" field in the corresponding SCI; "priority" value of SL SR is equal to the logical channel priority of the corresponding SL data; UL transmission can be either PUCCH or PUSCH; UL data may be carried in PUSCH; and this is a direct comparison between SL priorities without using UL data priority); 4. If PUCCH contains SL HARQ or SL SR, and the "priority" value of SL HARQ or SL SR is higher than the "priority" level in the SCI of the SL transmission, then the SL transmission is prioritized (since Rel16 V2X does not support the multiplexing of SL HARQ and Uu UCI on PUCCH/PUSCH, the priority of SL HARQ/SR may simply be compared with the priority of SL transmission; this is a direct comparison between SL priorities without using UL data/Uu UCI priority); 5. If PUSCH contains only SL HARQ or SL SR and no UL data, and the "priority" value of SL HARQ or SL SR is higher than the "priority" level in the SCI of the SL transmission, then the SL transmission is prioritized (this is a direct comparison between SL priorities without using UL data priority); 6. If the value in "priority" field of SCI of SL transmission is smaller than a high layer parameter *"thresSL-TxPrioritization",* then SL transmission is prioritized, otherwise, UL transmission is prioritized (this step applies, but not limited, to the case where PUSCH contains both sidelink HARQ or sidelink SR and uplink data, and the "priority" value of sidelink HARQ or sidelink SR is higher than the "priority" level in the SCI of sidelink transmission; this step applies, but not limited, to the case where PUCCH or PUSCH contains eMBB Uu UCI and/or eMBB uplink data, but does not apply to any URLLC traffic where UL transmission is already prioritized). Notably, in the above procedure, the priority value for SL PSFCH transmissions is indicated by the corresponding SCI and the priority value for SSB transmission is by configuration, If multiple SL transmissions are considered, then the highest priority (i.e., the smallest priority value in SCI) among them is used. If multiple SL HARQ or SL SR in the uplink transmissions are considered, then the highest priority (i.e., the smallest priority value in SCI) among them is used. The above steps may be in sequential order.

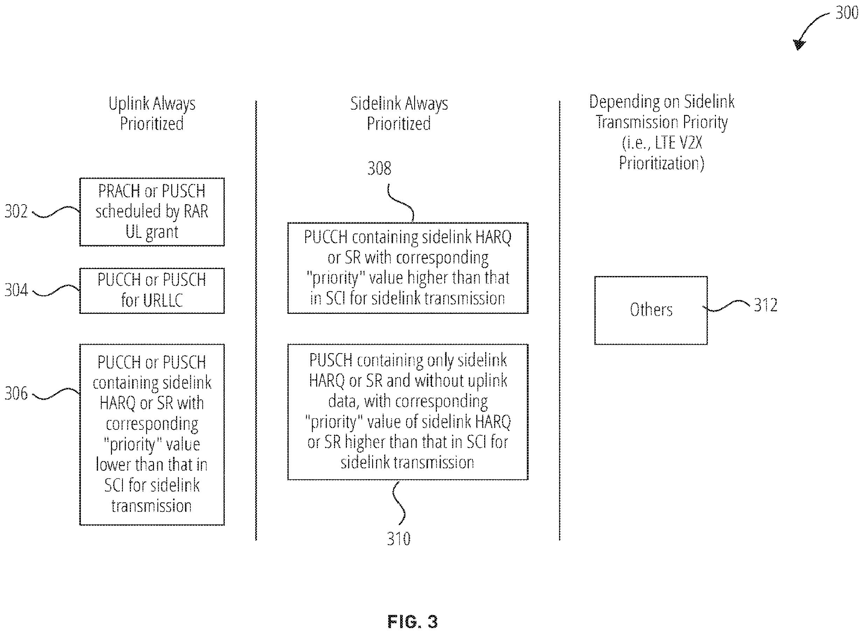

Figure 3 illustrates a visual representation of the procedure 300 described more fully above. In particular, blocks 302 through 306 show the scenarios under which UL is prioritized, blocks 308 and 310 show the scenarios under which SL is prioritized, and block 312 represents the other scenarios under which prioritization depends on SL transmission priority.

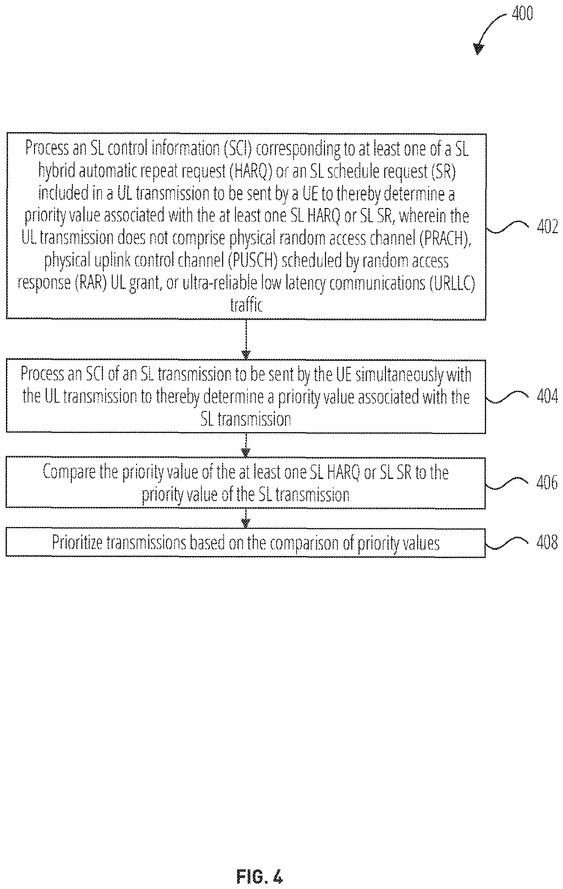

Figure 4 illustrates a flowchart of a method 400 for determining priority of a simultaneous SL transmission and UL transmission of a UE within a 5G New Radio (NR) network In block 402, the method 400 processes an SL control information (SCI) corresponding to at least one of a SL hybrid automatic repeat request (HARQ) or an SL schedule request (SR) included in a UL transmission to be sent by a UE to thereby determine a priority value associated with the at least one SL HARQ or SL SR, wherein the UL transmission does not comprise physical random access channel (PRACH), physical uplink control channel (PUSCH) scheduled by random access response (RAR) UL grant, or ultra-reliable low latency communications (URLLC) traffic. Notably, the SL HARQ report in the UL transmission may be an ACK/NACK. of the SL transmission. In addition, The SCI may be transmitted in SL transmissions from Tx UE to Re UE rather than being included in the SL HARQ report (notably, the SCI contains a "priority value" field). In block 404, the method 400 processes an SCI of an SL transmission to be sent by the UE simultaneously with the UL transmission to thereby determine a priority value associated with the SL transmission. In block 406, the method 400 compares the priority value of the at least one SL HARQ or SL SR to the priority value of the SL transmission. In block 408, the method 400 prioritizes transmissions based on the comparison of priority values.

Regarding the second issue, the following procedure describes the prioritization of UL transmission with SL HARQ report (i.e., to gNB) and Uu UCI (i.e., UL Tx) as a solution to problems that may occur with a time overlap between the SL HARQ report and the Uu UCI in the Uu the control domain: 1. If the UL transmission is Uu URLLC UCI transmissions on PUCCH/PUSCH (Including URLLC downlink HARQ-ACK, CSI report, or scheduling request (SR)), which is indicated by DCI format U_1, 0_2, 1_1, 1_2 with the "priority indicator" field equal to 1, the UL transmission (i.e., the Uu URLLC UCI) is prioritized and the SL HARQ report is dropped (i.e., Uu URLLC UCI transmission is always prioritized over sidelink HARQ report); 2. If the UL transmission is eMBB UCI transmissions on PUCCH/PUSCH, which is indicated by DCI format 0_1, 0_2, 1_1, 1_2 with the "priority indicator" field equal to 0, by "priorityIndicator-ForDCIformat" not being configured, or by DCI format 0_0, 1_0 or periodic/semi-persistent CSI reporting, prioritization depends on a priority of the SL HARQ report. In particular, if the "priority" value in an SCI corresponding to the SL HARQ report is lower than a threshold (SL-priority Threshold), the UL transmission is dropped (i.e., the eMBB UCI) and the SL HARQ report is prioritized (notably, the "priority" value in SCI may be equal to LCP (logical channel priority) value of SL data). Conversely, if the "priority" value in an SCI corresponding to the SL HARQ report is higher than a threshold (SL-priority Threshold), the SL HARQ report is dropped and the UL transmission (i.e., the eMBB UCI) is prioritized; and 3. If multiple SL HARQ reports are considered, then the smallest "priority" value among all SCI corresponding to SL HARQ reports is used. Accordingly, prioritization of UL transmission with SL HARQ report (i.e., to gNB) and Uu UCI (i.e., UL Tx) may consider both Uu UCI priority (i.e., URLLC UCI or eMBB UCI) and sidelink HARQ report priority (as indicated in the corresponding SCI) and drops one of the Uu UCI and the sidelink HARQ report.

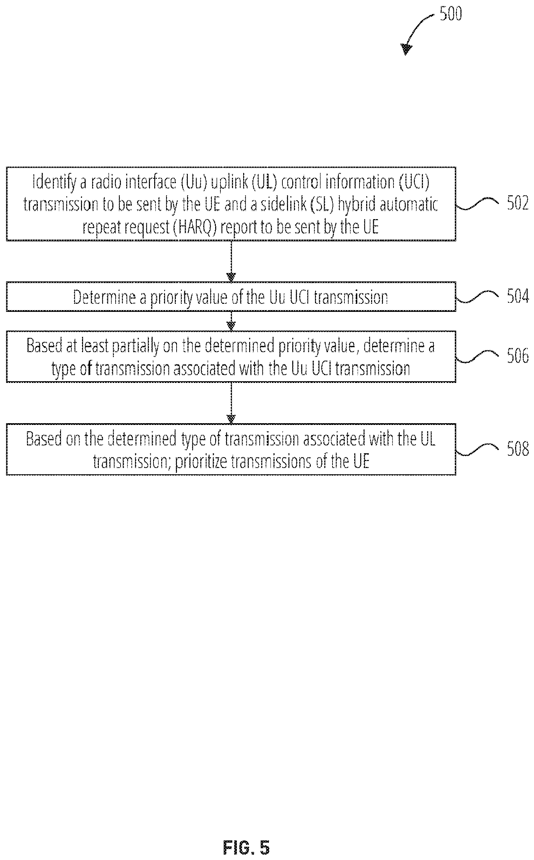

Figure 5 illustrates a flowchart of a method 500 for determining priority of simultaneous transmissions of a user equipment (UE) within a 5G New Radio (NR) network. In block 502, the method 500 identifies a radio interface (Uu) uplink (UL) control information (UCI) transmission to be sent by the UE and a sidelink (SL) hybrid automatic repeat request (HARQ) report to be sent by the UE. In block 504, the method 500 determines a priority value of the Uu UCI transmission. In block 506, the method 500 based at least partially on the determined priority value, determines a type of transmission associated with the Uu UCI transmission. In block 508, the method 500 based on the determined type of transmission associated with the UL transmission: prioritizes transmissions of the UE.

Alternatively, the following procedure may be used in solving the second issue (i.e., time overlap between SL HARQ report and the Uu UCI Solution) in MAC: 1. The condition indicated by DCI format 0_1, 0_2, 1_1, 1_2 with "priority indicator" field equal to 1 may be checked, which is only applicable to UL URLLC UCI; and 2. In 3GPP RRC specification, it has been agreed to introduce a threshold for UL traffic, as part of MAC layer configuration (i.e., *"ul-PrioritizationThres-r16"*), so the UE can identify the logical channels that trigger to the UL Tx, and determine if the LCH priority of this traffic is lower than the *ul-PrioritizationThres* threshold. If the LCH priority of this traffic is lower than the threshold, then the UE will prioritize the transmission of UCI for this LCH in PUCCH/PUSCH. Conversely, if the LCH priority of this traffic is not lower than the threshold, then the UE can begin using the previous solution to the second issue beginning at number 2, which is associated with determining that the UL transmission is an eMBB UCI transmission on PUCCH/PUSCH.

Regarding the third issue, the following procedure describes prioritization associated with multiplexing SL HARQ report with uplink data on PUSCH in the Uu data domain as a solution to problems that may occur with a time overlap between the SL HARQ report to gNB and UL data transmission: 1. For URLLC uplink data transmission on PUSCH, which is indicated by DCI Format 0_1, 0_2 or uplink configured grant with "priority indicator" field equal to 1: URLLC uplink data transmission is always prioritized over SL HARQ report. In such cases, there is no transmission of the SL HARQ report (i.e., only transmission of URLLC uplink data), 2. For eMBB uplink data transmission on PUSCH, which is indicated by DCI Format 0_1, 0_2 or uplink configured grant with "priority indicator" field equal to 0, by the "priorityIndicator-ForDCIformat" not being configured, or by DCI format 0_0, there are numerous options as follows: Option 1: Drop or delay eMBB UL data transmissions or SL HARQ report, based on UL data priority and SL HARQ report priority as follows: Option 1a: If the LCP value of the eMBB UL data is lower than a threshold (UL-priority Threshold), then the SL HARQ report is dropped or delayed. If not, and the LCP value of the SL data corresponding to the SL HARQ report is lower than a threshold (SL-priority Threshold), then the eMBB UL data is dropped or delayed. If neither the eMBB UL data is lower than the threshold (UL-priorityThreshold) nor the LCP value of the SL data corresponding to the SL HARQ report is lower than a threshold (SL-priorityThreshold), the SL HARQ report is dropped or delayed; Option 1b (i.e., used instead of Option la): if the LCP value of the eMBB UL data is lower than the LCP value of the SL data corresponding to the SL HARQ report, then the SL HARQ report is dropped or delayed. Conversely, if the LCP value of the eMBB UL data is not lower than the LCP value of the SL data corresponding to the SL HARQ report, then the eMBB UL data is dropped or delayed; Option 2 (i.e., instead of Option 1): the SL HARQ report is piggybacked on PUSCH with UL transmissions.

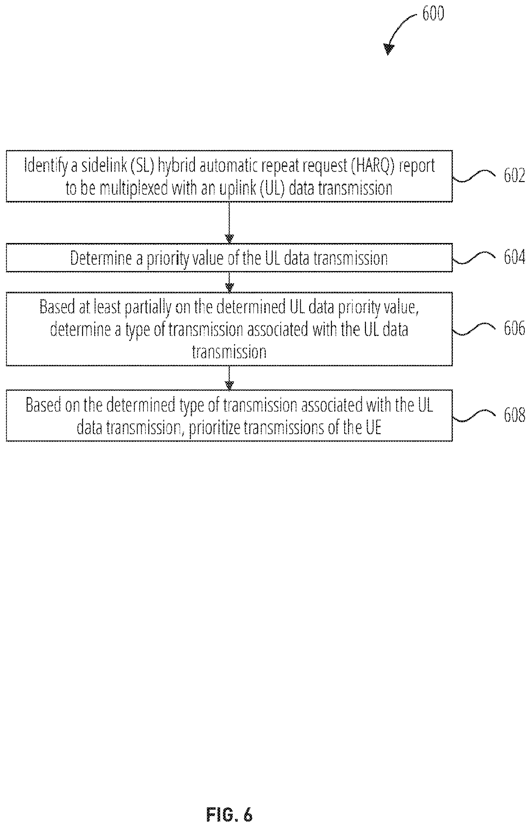

Figure 6 illustrates a flowchart of a method 600 for determining priority of simultaneous transmissions of a user equipment (UE) on physical uplink control channel (PUSCH) within a 5G New Radio (NR) network. In block 602, the method 600 identifies a sidelink (SL) hybrid automatic repeat request (HARQ) report to be multiplexed with an uplink (UL) data transmission. In block 604, the method 600 determines a priority value of the UL data transmission. In block 606, the method 600, based at least partially on the determined UL data priority value, determines a type of transmission associated with the UL data transmission. In block 608, the method 600, based on the determined type of transmission associated with the UL data transmission, prioritizes transmissions of the UE.

Alternatively, other options may be used in solving the third issue (i.e., determining the multiplexing order for UL grant). Usually, UL grant is multiplexed according to the MAC procedure described in TS 38.321 clause 5.4.3.1.3. In additional, while noting that URLLC traffic may not be multiplexed with SL HARQ, there can be a unique problem in determining how to compare the SL HARQ report with generic UL logical channels and other MAC CEs in this LCP process. In this case, the following options may be considered. Option 1: accommodate SL HARQ earlier than any UL LCHs. Regarding the relationship between this and other MAC CE, either multiplex this behind UL BSR (non-padding) or SL BSR (non-padding) or, follow the same rule defined for SL BSR case in RAN2, which is to be determined; Option 2: some UL LCHs that are lower than the *ul-PrioritizationThres* will be multiplexed earlier than SL HARQ, and for other UL LCHs, if the highest priority SL LCH included in the SL MAC PDU which triggers SL HARQ is lower than the s/-*PrioritizationThres,* then SL HARQ is multiplexed earlier. Otherwise, those UL data are multiplexed earlier than SL HARQ.

Regarding the fourth issue, the following procedure describes prioritization of SL grants in Mode 1 (notably, in NR Uu link, the time overlap between dynamic grant PUSCH and configured grant PUSCH may happen, in which case the dynamic grant PUSCH is prioritized over the configured grant PUSCH in general): 1. If an SL configured grant has time overlap with an SL dynamic grant, there are two alternative Options: 1a: the SL dynamic grant is prioritized over the SL configured grant; or Option 1b: the SL grant with the lower logical channel priority (LCP) value is prioritized.

### Example System Architecture

In certain embodiments, 5G System architecture supports data connectivity and services enabling deployments to use techniques such as Network Function Virtualization and Software Defined Networking. The 5G System architecture may leverage service-based interactions between Control Plane Network Functions. Separating User Plane functions from the Control Plane functions allows independent scalability, evolution, and flexible deployments (e.g., centralized location or distributed (remote) location). Modularized function design allows for function re-use and may enable flexible and efficient network slicing. A Network Function and its Network Function Services may interact with another NF and its Network Function Services directly or indirectly via a Service Communication Proxy. Another intermediate function may help route Control Plane messages. The architecture minimizes dependencies between the AN and the CN. The architecture may include a converged core network with a common AN - CN interface that integrates different Access Types (e.g., 3GPP access and non-3GPP access). The architecture may also support a unified authentication framework, stateless NFs where the compute resource is decoupled from the storage resource, capability exposure, concurrent access to local and centralized services (to support low latency services and access to local data networks, User Plane functions can be deployed close to the AN), and/or roaming with both Home routed traffic as well as Local breakout traffic in the visited PLMN.

The 5G architecture may be defined as service-based and the interaction between network functions may include a service-based representation, where network functions (e.g., AMF) within the Control Plane enable other authorized network functions to access their services. The service-based representation may also include point-to-point reference points. A reference point representation may also be used to show the interactions between the NF services in the network functions described by point-to-point reference point (e.g., N11) between any two network functions (e.g., AMF and SMF).

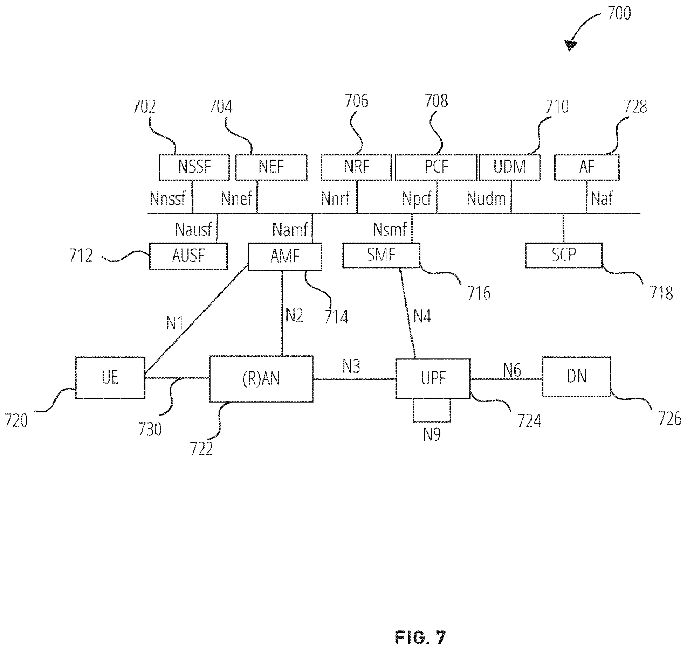

FIG. 7 illustrates a service based architecture 700 in 5GS according to one embodiment. As described in 3GPP TS 23.501, the service based architecture 700 comprises NFs such as an NSSF 702, a NEF 704, an NRF 706, a PCF 708, a UDM 710, an AUSF 712, an AMF 714, an SMF 716, for communication with a UE 720, a (R)AN 722, a UPF 724, and a DN 726. The NFs and NF services can communicate directly, referred to as Direct Communication, or indirectly via a SCP 718, referred to as Indirect Communication. FIG. 7 also shows corresponding service-based interfaces including Nutm, Naf, Nudm, Npcf, Nsmf, Nnrf, Namf, Nnef, Nnssf, and Nausf, as well as reference points N1, N2, N3, N4, and N6. A few example functions provided by the NFs shown in FIG. 7 are described below.

The NSSF 702 supports functionality such as selecting the set of Network Slice instances serving the UE; determining the Allowed NSSA1 and, if needed, mapping to the Subscribed S-NSSAIs; determining the Configured NSSAI and, if needed, the mapping to the Subscribed S-NSSAIs; and/or determining the AMF Set to be used to serve the UE, or, based on configuration, a list of candidate AMF(s), possibly by querying the NRF.

The NEF 704 supports exposure of capabilities and events. NF capabilities and events may be securely exposed by the NEF 704 (e.g., for 3rd party, Application Functions, and/or Edge Computing). The NEF 704 may store/retrieve information as structured data using a standardized interface (Nudr) to a UDR. The NEF 704 may also secure provision of information from an external application to 3GPP network and may provide for the Application Functions to securely provide information to the 3GPP network (e.g., expected UE behavior, 5GLAN group information, and service specific information), wherein the NEF 704 may authenticate and authorize and assist in throttling the Application Functions. The NEF 704 may provide translation of internal-external information by translating between information exchanged with the AF and information exchanged with the internal network function. For example, the NEF 704 translates between an AF-Service-Identifier and internal 5G Core information such as DNN and S-NSSAI. The NEF 704 may handle masking of network and user sensitive information to external AF's according to the network policy. The NEF 704 may receive information from other network functions (based on exposed capabilities of other network functions), and stores the received information as structured data using a standardized interface to a UDR. The stored information can be accessed and re-exposed by the NEF 704 to other network functions and Application Functions, and used for other purposes such as analytics. For external exposure of services related to specific UE(s), the NEF 704 may reside in the HPLMN. Depending on operator agreements, the NEF 704 in the IIPLMN may have interface(s) with NF(s) in the VPLMN. When a UE is capable of switching between EPC and 5GC, an SCEF+NEF may be used for service exposure.

The NRF 706 supports service discovery function by receiving an NF Discovery Request from an NF instance or SCP and providing the information of the discovered NF instances to the NF instance or SCP. The NRF 706 may also support P-CSCF discovery (specialized case of AF discovery by SMF), maintains the NF profile of available NF instances and their supported services, and/or notify about newly registered/updated/ deregistered NF instances along with its NF services to the subscribed NF service consumer or SCP. In the context of Network Slicing, based on network implementation, multiple NRFs can be deployed at different levels such as a PLMN level (the NRF is configured with information for the whole PLMN), a shared-slice level (the NRF is configured with information belonging to a set of Network Slices), and/or a slice-specific level (the NRF is configured with information belonging to an S-NSSAI). In the context of roaming, multiple NRFs may be deployed in the different networks, wherein the NRF(s) in the Visited PLMN (known as the vNRF) are configured with information for the visited PLMN, and wherein the NRF(s) in the Home PLMN (known as the hNRF) are configured with information for the hoine PLMN, referenced by the vNRF via an N27 interface.

The PCF 708 supports a unified policy framework to govern network behavior. The PCF 708 provides policy rules to Control Plane function(s) to enforce them. The PCF 708 accesses subscription information relevant for policy decisions in a Unified Data Repository (UDR). The PCF 708 may access the UDR located in the same PLMN as the PCF.

The UDM 710 supports generation of 3GPP AKA Authentication Credentials, User Identification Handling (e.g., storage and management of SUPI for each subscriber in the 5G system), de-concealment of a privacy-protected subscription identifier (SUCI), access authorization based on subscription data (e.g., roaming restrictions), UE's Serving NF Registration Management (e.g., storing serving AMF for UE, storing serving SMF for UE's PDU Session), service/session continuity (e.g., by keeping SMF/DNN assignment of ongoing sessions., MT-SMS delivery, Lawful Intercept Functionality (especially in outbound roaming cases where a UDM is the only point of contact for LI), subscription management, SMS management, 5GLAN group management handling, and/or external parameter provisioning (Expected UE Behavior parameters or Network Configuration parameters). To provide such functionality, the UDM 710 uses subscription data (including authentication data) that may be stored in a UDR, in which case a UDM implements the application logic and may not require an internal user data storage and several different UDMs may serve the same user in different transactions. The UDM 710 may be located in the HPLMN of the subscribers it serves, and may access the information of the UDR located in the same PLMN.

The AF 728 interacts with the Core Network to provide services that, for example, support the following: application influence on traffic routing; accessing the NEF 704; interacting with the Policy framework for policy control; and/or IMS interactions with 5GC. Based on operator deployment, Application Functions considered to be trusted by the operator can be allowed to interact directly with relevant Network Functions. Application Functions not allowed by the operator to access directly the Network Functions may use the external exposure framework via the NEF 704 to interact with relevant Network Functions.

The AUSF 712 supports authentication for 3GPP access and untrusted non-3GPP access. The AUSF 712 may also provide support for Network Slice-Specific Authentication and Authorization,

The AMF 714 supports termination of RAN CP interface (N2), termination of NAS (N1) for NAS ciphering and integrity protection, registration management, connection management, reachability management, Mobility Management, lawful intercept (for AMF events and interface to LI System), transport for SM messages between UE and SMF, transparent proxy for routing SM messages, Access Authentication, Access Authorization, transport for SMS messages between UE and SMSF, SEAF, Location Services management for regulatory services, transport for Location Services messages between UE and LMF as well as between RAN and LMF, EPS Bearer ID allocation for interworking with EPS, UE mobility event notification, Control Plane CIoT 5GS Optimization, User Plane CIoT 5GS Optimization, provisioning of external parameters (Expected UE Behavior parameters or Network Configuration parameters), and/or Network Slice-Specific Authentication and Authorization. Some or all of the AMF functionalities may be supported in a single instance of the AMF 714. Regardless of the number of Network functions, in certain embodiments there is only one NAS interface instance per access network between the UE and the CN, terminated at one of the Network functions that implements at least NAS security and Mobility Management. The AMF 714 may also include policy related functionalities.

In addition to the functionalities described above, the AMF 714 may include the following functionality to support non-3GPP access networks: support of N2 interface with N3IWF/TNGF, over which some information (e.g., 3GPP Cell Identification) and procedures (e.g., Handover related) defined over 3GPP access may not apply, and non-3GPP access specific information may be applied that do not apply to 3GPP accesses; support of NAS signaling with a UE over N3IWF/TNGF, wherein some procedures supported by NAS signaling over 3GPP access may be not applicable to untrusted non-3GPP (e.g., Paging) access, support of authentication of UEs connected over N31WF/TNGF; management of mobility, authentication, and separate security context state(s) of a UE connected via a non-3GPP access or connected via a 3GPP access and a non-3GPP access simultaneously; support a coordinated RM management context valid over a 3GPP access and a Non 3GPP access; and/or support dedicated CM management contexts for the UE for connectivity over non-3GPP access. Not all of the above functionalities may be required to be supported in an instance of a Network Slice.

The SMF 716 supports Session Management (e.g., Session Establishment, modify and release, including tunnel maintain between UPF and AN node), UE IP address allocation & management (including optional Authorization) wherein the UE IP address may be received from a UPF or from an external data network, DHCPv4. (server and client) and DHCPv6 (server and client) functions, functionality to respond to Address Resolution Protocol requests and/or IPv6 Neighbor Solicitation requests based on local cache information for the Ethernet PDUs (e.g., the SMF responds to the ARP and/or the IPv6 Neighbor Solicitation Request by providing the MAC address corresponding to the IP address sent in the request), selection and control of User Plane functions including controlling the UPF to proxy ARP or IPv6 Neighbor Discovery or to forward all ARP/IPv6 Neighbor Solicitation traffic to the SMF for Ethernet PDU Sessions, traffic steering configuration at the UPF to route traffic to proper destinations, 5G VN group management (e.g., maintain the topology of the involved PSA UPFs, establish and release the N19 tunnels between PSA UPFs, configure traffic forwarding at UPF to apply local switching, and/or N6-based forwarding or N19-based forwarding), termination of interfaces towards Policy control functions, lawful intercept (for SM events and interface to LI System), charging data collection and support of charging interfaces, control and coordination of charging data collection at the UPF, termination of SM parts of NAS messages, Downlink Data Notification, Initiator of AN specific SM information sent via AMF over N2 to AN, determination of SSC mode of a session, Control Plane CloT 5GS Optimization, header compression, acting as I-SIVIF in deployments where I-SMF' can be inserted/renioved/relocated, provisioning of external parameters (Expected UE Behavior parameters or Network Configuration parameters), P-CSCF discovery for IMS services, roaming functionality (e.g., handle local enforcement to apply QoS SLAs (VPLMN), charging data collection and charging interface (VPLMN), and/or lawful intercept (in VPLMN for SM events and interface to LI System), interaction with external DN for transport of signaling for PDU Session authentication/authorization by external DN, and/or instructing UPF and NG-RAN to perform redundant transmission on N3/N9 interfaces. Some or all of the SMF functionalities may be supported in a single instance of a SMF. However, in certain embodiments, not all of the functionalities are required to be supported in an instance of a Network Slice. In addition to the functionalities , the SMF 716 may include policy related functionalities.

The SCP 718 includes one or more of the following functionalities: Indirect Communication; Delegated Discovery, message forwarding and routing to destination NF/NF services; communication security (e.g., authorization of the NF Service Consumer to access the NF Service Producer's API), load balancing, monitoring, overload control, etc.; and/or optionally interact with the UDR, to resolve the UDM Group ID/UDR Group ID/AUSF Group ID/PCF Group ID/CHF Group ID/HSS Group ID based on UE identity (e.g., SUPI or IMPI/IMPU). Some or all of the SCP functionalities may be supported in a single instance of an SCP. In certain embodiments, the SCP 718 may be deployed in a distributed manner and/or more than one SCP can be present in the communication path between NF Services. SCPs can be deployed at PLMN level, shared-slice level, and slice-specific level. It may be left to operator deployment to ensure that SCPs can communicate with relevant NRFs.

The UE 720 may include a device with radio communication capabilities. For example, the UE 720 may comprise a smartphone (e.g., handheld touchscreen mobile computing devices connectable to one or more cellular networks). The UE 720 may also comprise any mobile or non-mobile computing device, such as Personal Data Assistants (PDAs), pagers, laptop computers, desktop computers, wireless handsets, or any computing device including a wireless communications interface. A UE may also be referred to as a client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. The UE 720 may comprise an IoT UE, which can comprise a network access layer designed for low-power IoT applications utilizing short-lived UE connections. An loT UE can utilize technologies (e.g., M2M, MTC, or mMTC technology) for exchanging data with an MTC server or device via a PLMN, other UEs using ProSe or D2D communications, sensor networks, or IoT networks. The M2M or MTC exchange of data may be a machine-initiated exchange of data. An loT network describes interconnecting IoT UEs, which may include uniquely identifiable embedded computing devices (within the Internet infrastructure). The IoT UEs may execute background applications (e.g., keep-alive messages, status updates, etc.) to facilitate the connections of the IoT network.

The UE 720 may be configured to connect or communicatively couple with the (R)AN 722 through a radio interface 730, which may be a physical communication interface or layer configured to operate with cellular communication protocols such as a GSM protocol, a CDMA network protocol, a Push-to-Talk (PTT) protocol, a PTT over Cellular (POC) protocol, a UMTS protocol, a 3GPP LTE protocol, a 5G protocol, a NR protocol, and the like. For example, the UE 720 and the (R)AN 722 may use a Uu interface (e.g., an LTE-Uu interface) to exchange control plane data via a protocol stack comprising a PHY layer, a MAC layer, an RLC layer, a PDCP layer, and an RRC layer. A DL transmission may be from the (R)AN 722 to the UE 720 and a UL transmission may be from the UE 720 to the (R)AN 722. The UE 720 may further use a sidelink to communicate directly with another UE (not shown) for D2D, P2P, and/or ProSe communication. For example, a ProSe interface may comprise one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The (R)AN 722 can include one or more access nodes, which may be referred to as base stations (BSs), NodeBs, evolved NodeBs (eNBs), next Generation NodeBs (gNB), RAN nodes, controllers, transmission reception points (TRPs), and so forth, and can comprise ground stations (e.g., terrestrial access points) or satellite stations providing coverage within a geographic area (e.g., a cell). The (R)AN 722 may include one or more RAN nodes for providing macrocells, picocells, femtocells, or other types of cells. A macrocell may cover a relatively large geographic area (e.g., several kilometers in radius) and may allow unrestricted access by UEs with service subscription. A picocell may cover a relatively small geographic area and may allow unrestricted access by UEs with service subscription. A femtocell may cover a relatively small geographic area (e.g., a home) and may allow restricted access by UEs having an association with the femtocell (e.g., UEs in a Closed Subscriber Group (CSG), UEs for users in the home, etc.)

Although not shown, multiple RAN nodes (such as the (R)AN 722) may be used, wherein an Xn interface is defined between two or more nodes. In some implementations, the Xn interface may include an Xn user plane (Xn-U) interface and an Xn control plane (Xn-C) interface. The Xn-U may provide non-guaranteed delivery of user plane PDUs and support/provide data forwarding and flow control functionality. The Xn-C may provide management and error handling functionality, functionality to manage the Xn-C interface; mobility support for the UE 720 in a connected mode (e.g., CM-CONNECTED) including functionality to manage the UE mobility for connected mode between one or more (R)AN nodes. The mobility support may include context transfer from an old (source) serving (R)AN node to new (target) serving (R)AN node; and control of user plane tunnels between old (source) serving (R)AN node to new (target) serving (R)AN node.

The UPF 724 may act as an anchor point for intra-RAT and inter-RAT mobility, an external PDU session point of interconnect to the DN 726, and a branching point to support multi-homed PDU session. The UPF 724 may also perform packet routing and forwarding, packet inspection, enforce user plane part of policy rules, lawfully intercept packets (UP collection); traffic usage reporting, perform QoS handling for user plane (e.g. packet filtering, gating, UL/DL rate enforcement), perform Uplink Traffic verification (e.g., SDF to QoS flow mapping), transport level packet marking in the uplink and downlink, and downlink packet buffering and downlink data notification triggering. The UPF 724 may include an uplink classifier to support routing traffic flows to a data network. The DN 726 may represent various network operator services, Internet access, or third party services. The DN 726 may include, for example, an application server.

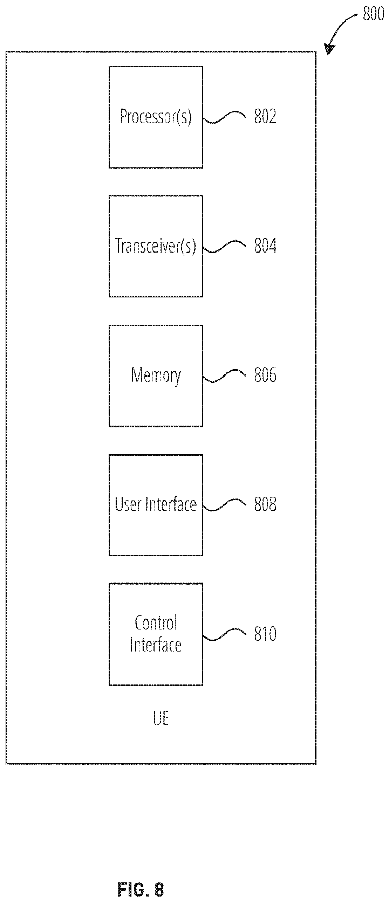

FIG. 8 is a block diagram of an example UE 800 configurable according to various embodiments of the present disclosure, including by execution of instructions on a computer-readable medium that correspond to any of the example methods and/or procedures described herein. The UE 800 comprises one or more processor 802, transceiver 804, memory 806, user interface 808, and control interface 810.

The one or more processor 802 may include, for example, an application processor, an audio digital signal processor, a central processing unit, and/or one or more baseband processors . Each of the one or more processor 802 may include internal memory and/or may include interface(s) to communication with external memory (including the memory 806). The internal or external memory can store software code, programs, and/or instructions for execution by the one or more processor 802 to configure and/or facilitate the UE 800 to perform various operations, including operations described herein. For example, execution of the instructions can configure the UE 800 to communicate using one or more wired or wireless communication protocols, including one or more wireless communication protocols standardized by 3GPP such as those commonly known as 5G/NR, LTE, LIE-A, UMTS, HSPA, GSM, GPRS, EDGE, etc., or any other current or future protocols that can be utilized in conjunction with the one or more transceiver 804, user interface 808, and/or control interface 810. As another example, the one or more processor 802 may execute program code stored in the memory 806 or other memory that corresponds to MAC, RLC, PDCP, and RRC layer protocols standardized by 3GPP (e.g., for NR and/or LTE). As a further example, the processor 802 may execute program code stored in the memory 806 or other memory that, together with the one or more transceiver 804, implements corresponding PHY layer protocols, such as Orthogonal Frequency Division Multiplexing (OFDM), Orthogonal Frequency Division Multiple Access (OFDMA), and Single-Carrier Frequency Division Multiple Access (SC-FDMA).

The memory 806 may comprise memory area for the one or more processor 802 to store variables used in protocols, configuration, control, and other functions of the UE 800, including operations corresponding to, or comprising, any of the example methods and/or procedures described herein. Moreover, the memory 806 may comprise non-volatile memory (e.g., flash memory), volatile memory (e.g., static or dynamic RAM), or a combination thereof. Furthermore, the memory 806 may interface with a memory slot by which removable memory cards in one or more formats (e.g., SD Card, Memory Stick, Compact Flash, etc.) can be inserted and removed.

The one or more transceiver 804 may include radio-frequency transmitter and/or receiver circuitry that facilitates the UE 800 to communicate with other equipment supporting like wireless communication standards and/or protocols. For example, the one or more transceiver 804 may include switches, mixer circuitry, amplifier circuitry, filter circuitry, and synthesizer circuitry . Such RF circuitry may include a receive signal path with circuitry to down-convert RF signals received from a front-end module (FEM) and provide baseband signals to a baseband processor of the one or more processor 802. The RF circuitry may also include a transmit signal path which may include circuitry to up-convert baseband signals provided by a baseband processor and provide RF output signals to the FEM for transmission . The FEM may include a receive signal path that may include circuitry configured to operate on RF signals received from one or more antennas, amplify the received signals and provide the amplified versions of the received signals to the RF circuitry for further processing. The FEM may also include a transmit signal path that may include circuitry configured to amplify signals for transmission provided by the RF circuitry for transmission by one or more antennas. In various embodiments, the amplification through the transmit or receive signal paths may be done solely in the RF circuitry, solely in the FEM, or in both the RF circuitry and the FEM circuitry. In some embodiments, the FEM circuitry may include a TX/RX switch to switch between transmit mode and receive mode operation.

In some exemplary embodiments, the one or more transceiver 804 includes a transmitter and a receiver that enable device 1200 to communicate with various 5G/NR networks according to various protocols and/or methods proposed for standardization by 3 GPP and/or other standards bodies. For example, such functionality can operate cooperatively with the one or more processor 802 to implement a PHY layer based on OFDM, OFDMA, and/or SC-FDMA technologies, such as described herein with respect to other figures.

The user interface 808 may take various forms depending on particular embodiments, or can be absent from the UE 800. In some embodiments, the user interface 808 includes a microphone, a loudspeaker, slidable buttons, depressible buttons, a display, a touchscreen display, a mechanical or virtual keypad, a mechanical or virtual keyboard, and/or any other user-interface features commonly found on mobile phones. In other embodiments, the UE 800 may comprise a tablet computing device including a larger touchscreen display. In such embodiments, one or more of the mechanical features of the user interface 808 may be replaced by comparable or functionally equivalent virtual user interface features (e.g., virtual keypad, virtual buttons, etc.) implemented using the touchscreen display, as familiar to persons of ordinary skill in the art. In other embodiments, the UE 800 may be a digital computing device, such as a laptop computer, desktop computer, workstation, etc. that comprises a mechanical keyboard that can be integrated, detached, or detachable depending on the particular exemplary embodiment. Such a digital computing device can also comprise a touch screen display. Many example embodiments of the UE 800 having a touch screen display are capable of receiving user inputs, such as inputs related to exemplary methods and/or procedures described herein or otherwise known to persons of ordinary skill in the art.

In some exemplary embodiments of the present disclosure, the UE 800 may include an orientation sensor, which can be used in various ways by features and functions of the UE 800. For example, the UE 800 can use outputs of the orientation sensor to determine when a user has changed the physical orientation of the UE 800's touch screen display. An indication signal from the orientation sensor can be available to any application program executing on the UE 800, such that an application program can change the orientation of a screen display ( e.g., from portrait to landscape) automatically when the indication signal indicates an approximate 90-degree change in physical orientation of the device. In this manner, the application program can maintain the screen display in a manner that is readable by the user, regardless of the physical orientation of the device. In addition, the output of the orientation sensor can be used in conjunction with various exemplary embodiments of the present disclosure.

The control interface 810 may take various forms depending on particular embodiments. For example, the control interface 810 may include an RS-232 interface, an RS-485 interface, a USB interface, an HDMI interface, a Bluetooth interface, an IEEE ("Firewire") interface, an I²C interface, a PCMCIA interface, or the like. In some exemplary embodiments of the present disclosure, control interface 1260 can comprise an IEEE 802.3 Ethernet interface such as described above. In some embodiments of the present disclosure, the control interface 810may include analog interface circuitry including, for example, one or more digital-to-analog (D/A) and/or analog-to-digital (A/D) converters.

Persons of ordinary skill in the art can recognize the above list of features, interfaces, and radio-frequency communication standards is merely exemplary, and not limiting to the scope of the present disclosure. In other words, the UE 800 may include more functionality than is shown in FIG. 8 including, for example, a video and/or still-image camera, microphone, media player and/or recorder, etc. Moreover, the one or more transceiver 804 may include circuitry for communication using additional radio-frequency communication standards including Bluetooth, GPS, and/or others. Moreover, the one or more processor 802 may execute software code stored in the memory 806 to control such additional functionality. For example, directional velocity and/or position estimates output from a GPS receiver can be available to any application program executing on the UE 800, including various exemplary methods and/or computer-readable media according to various exemplary embodiments of the present disclosure.

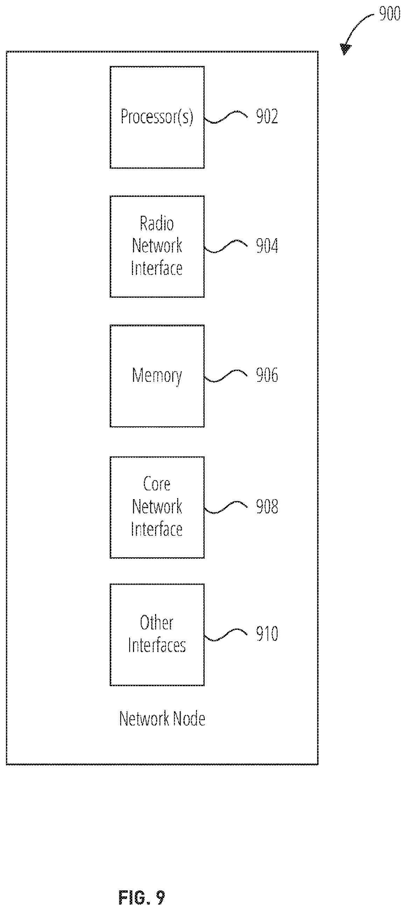

FIG. 9 is a block diagram of an example network node 900 configurable according to various embodiments of the present disclosure, including by execution of instructions on a computer-readable medium that correspond to any of the example methods and/or procedures described herein.

The network node 900 includes a one or more processor 902, a radio network interface 904, a memory 906, a core network interface 908, and other interfaces 910. The network node 900 may comprise, for example, a base station, eNB, gNB, access node, or component thereof.

The one or more processor 902 may include any type of processor or processing circuitry and may be configured to perform an of the methods or procedures disclosed herein. The memory 906 may store software code, programs, and/or instructions executed by the one or more processor 902 to configure the network node 900 to perform various operations, including operations described herein. For example, execution of such stored instructions can configure the network node 900 to communicate with one or more other devices using protocols according to various embodiments of the present disclosure, including one or more methods and/or procedures discussed above. Furthermore, execution of such stored instructions can also configure and/or facilitate the network node 900 to communicate with one or more other devices using other protocols or protocol layers, such as one or more of the PHY, MAC, RLC, PDCP, and RRC layer protocols standardized by 3GPP for LTE, LIE-A, and/or NR, or any other higher-layer protocols utilized in conjunction with the radio network interface 904 and the core network interface 908. By way of example and without limitation, the core network interface 908 comprise an S1 interface and the radio network interface 904 may comprise a Uu interface, as standardized by 3GPP. The memory 906 may also store variables used in protocols, configuration, control, and other functions of the network node 900. As such, the memory 906 may comprise non-volatile memory (e.g., flash memory, hard disk, etc.), volatile memory (e.g., static or dynamic RAM), network-based (e.g., "cloud") storage, or a combination thereof

The radio network interface 904may include transmitters, receivers, signal processors, ASICs, antennas, beamforming units, and other circuitry that enables network node 900 to communicate with other equipment such as, in some embodiments, a plurality of compatible user equipment (UE). In some embodiments, the network node 900 may include various protocols or protocol layers, such as the PHY, MAC, RLC, PDCP, and RRC layer protocols standardized by 3GPP for LTE, LTE-A, and/or 5G/NR. According to further embodiments of the present disclosure, the radio network interface 904 may include a PHY layer based on OFDM, OFDMA, and/or SC-FDMA technologies. In some embodiments, the functionality of such a PHY layer can be provided cooperatively by the radio network interface 904 and the one or more processor 902.

The core network interface 908 may include transmitters, receivers, and other circuitry that enables the network node 900 to communicate with other equipment in a core network such as, in some embodiments, circuit-switched (CS) and/or packet-switched Core (PS) networks. In some embodiments, the core network interface 908 may include the S1 interface standardized by 3GPP. In some embodiments, the core network interface 908 may include one or more interfaces to one or more SGWs, MMEs, SGSNs, GGSNs, and other physical devices that comprise functionality found in GERAN, UTRAN, E-UTRAN, and CDMA2000 core networks that are known to persons of ordinary skill in the art. In some embodiments, these one or more interfaces may be multiplexed together on a single physical interface. In some embodiments, lower layers of the core network interface 908 may include one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art.

The other interfaces 910 may include transmitters, receivers, and other circuitry that enables the network node 900 to communicate with external networks, computers, databases, and the like for purposes of operations, administration, and maintenance of the network node 900 or other network equipment operably connected thereto.

For one or more embodiments, at least one of the components set forth in one or more of the preceding figures may be configured to perform one or more operations, techniques, processes, and/or methods as set forth in the Example Section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Example Section

Example 1a may include a method of determining priority of a simultaneous sidelink (SL) transmission and uplink (UL) transmission of a user equipment (UE) within a 5G New Radio (NR) network, the method comprising: processing an SL control information (SCI) corresponding to at least one of a SL hybrid automatic repeat request (HARQ) or an SL schedule request (SR) included in a UL transmission to be sent by a UE to thereby determine a priority value associated with the at least one SL HARQ or SL SR, wherein the UL transmission does not comprise physical random access channel (PRACH), physical uplink control channel (PUSCH) scheduled by random access response (RAR) UL grant, or ultra-reliable low latency communications (URLLC) traffic; processing an SCT of an SL transmission to be sent by the UE simultaneously with the UL transmission to thereby determine a priority value associated with the SL transmission, comparing the priority value of the at least one SL HARQ or SL SR to the priority value of the SL transmission; and prioritizing transmissions based on the comparison of priority values.

Example 2a may include the method of example 1a, further comprising: based on comparing the priority values, determining that the at least one SL HARQ or SL SR is a higher priority than the SL transmission; and in response to determining the at least one SL HARQ or SL SR is a higher priority than the SL transmission, prioritizing the UL transmission over the SL transmission.

Example 3a may include the method of example 1a, further comprising: determining that the UL transmission is physical uplink control channel (PUCCH); based on comparing the priority values, determining that the at least one SL HARQ or SL SR is a lower priority than the SL transmission; and in response to determining the at least one SL HARQ or SL SR is a lower priority than the SL transmission, prioritizing the SL transmission over the UL transmission.

Example 4a may include the method of example 1a, further comprising: determining that the UL transmission is PUSCH, includes either the SL HARQ or the SL SR, and does not include other uplink data; based on comparing the priority values, determining that the SL HARQ or the SL SR is a lower priority than the SL transmission; and in response to determining the SL HARQ or the SL SR is a lower priority than the SL transmission, prioritizing the SL transmission over the UL transmission.

Example 5a may include an apparatus of a user equipment (UE), comprising: one or more processors configured to: identify a radio interface (Uu) uplink (UL) control information (UCI) transmission to be sent by the UE and a sidelink (SL) hybrid automatic repeat request (HARQ) report to be sent by the UE; determine a priority value of the Uu UCI transmission; based at least partially on the determined priority value, determine a type of transmission associated with the Uu UCI transmission; and based on the determined type of transmission associated with the UL transmission; prioritize transmissions of the UE; and a memory configured to store the Uu UCI and the SL HARQ report.

Example 6a may include the apparatus of example 5a, wherein the one or more processors are further configured to: determine that the type of transmission is an ultra-reliable low latency communications (URLLC) UCI transmission; and based on determining that the type of transmission is the URLLC UCI transmission: transmit the Uu UCI transmission; and drop the SL HARQ report.

Example 7a may include the apparatus of example 6a, wherein the URLLC UCI transmission comprises one of a URLLC downlink HARQ-ACK, a channel state information (CSI) report, or a scheduling request (SR).

Example 8a may include the apparatus of example 5a, wherein the one or more processors are further configured to: determine that the type of transmission is an enhanced mobile broadband (eMBB) UCI transmission, and based on determining that the type of transmission is the eMBB UCI transmission: process an SL control information (SCI) corresponding to the SL HARQ report to thereby determine a priority value associated with the SL HARQ report; compare the priority value associated with the SL HARQ report to a priority threshold; and prioritize transmissions based on the comparison of the priority value of the SL HARQ report to the priority threshold.

Example 9a may include the apparatus of example 8a, wherein the one or more processors are further configured to: based on comparing the priority value associated with the SL HARQ report to the priority threshold, determine that the priority value is lower than the priority threshold; and based on determining that the priority value is lower than the priority threshold: transmit the SL HARQ report; and drop the eMBB UCI transmission.

Example 10a may include the apparatus of example 8a, wherein the one or more processors are further configured to: based on comparing the priority value associated with the SL HARQ report to the priority threshold, determine that the priority value is higher than the priority threshold; and based on determining that the priority value is higher than the priority threshold: transmit the eMBB UCI transmission; and drop the SL HARQ report.

Example 11a may include the apparatus of example 8a, wherein the one or more processors are further configured to: identify at least one additional SL HARQ report to be sent by the UE; process an SCI corresponding to each of the at least one additional SL HARQ report to thereby determine a priority value associated with each of the at least one additional SL HARQ report; and use the SCI corresponding to the SL HARQ report and each of the at least one additional HARQ report that has the lowest priority value when comparing to the priority threshold.

Example 12a may include a computer-readable storage medium, the computer-readable storage medium including instructions that when executed by a processor of a user equipment (UE) configured to determine priority of simultaneous transmissions of the user equipment (UE) on a physical uplink control channel (PUSCH) within a 5G New Radio (NR) network, cause the processor to: identify a sidelink (SL) hybrid automatic repeat request (HARQ) report to be multiplexed with an uplink (UL) data transmission; determine a priority value of the UL data transmission; based at least partially on the determined UL data priority value, determine a type of transmission associated with the UL data transmission; and based on the determined type of transmission associated with the UL data transmission, prioritize transmissions of the UE.

Example 13a may include the computer-readable storage medium of example 12, wherein the instructions further configure the processor to: determine that the type of transmission is an ultra-reliable low latency communications (URLLC) UL data transmission; and based on determining that the type of transmission is the URLLC UL data transmission: send the UL data transmission; and drop the SL HARQ report.

Example 14a may include the computer-readable storage medium of example 12a, wherein the instructions further configure the processor to: determine that the type of transmission is an enhanced mobile broadband (eMBB) UL data transmission; and based on determining that the type of transmission is the eMBB UL data transmission compare the priority value of the UL data transmission to a UL priority threshold, and prioritize transmissions of the UE based on the comparison of the priority value of the UL data transmission to the UL priority threshold.

Example 15a may include the computer-readable storage medium of example 14a, wherein the instructions further configure the processor to: determine that the priority value of the UL data transmission is lower than the UL priority threshold; and based on determining that the priority value of the UL data transmission is lower than the UL priority threshold: transmit the UL data transmission; and drop or delay the SL HARQ report.

Example 16a may include the computer-readable storage medium of example 14a, wherein the instructions further configure the processor to: determine that the priority value of the UL data transmission is higher than the UL priority threshold; and based on determining that the priority value of the UL data transmission is higher than the UL priority threshold: process an SL control information (SCI) corresponding to the SL HARQ report to thereby determine a priority value associated with the SL HARQ report; compare the priority value of the SL HARQ report to an SL priority threshold; and prioritize transmissions based on the comparison of the priority value of the SL HARQ report to the SL priority threshold.

Example 17a may include the computer-readable storage medium of example 16a, wherein the instructions further configure the processor to: determine that the priority value of the SL, HARQ report is lower than the SL priority threshold; and based on determining that the priority value of the SL HARQ report is lower than the SL priority threshold: transmit the SL HARQ report; and drop or delay the UL data transmission.

Example 18a may include the computer-readable storage medium of example 16a, wherein the instructions further configure the processor to: determine that the priority value of the SL HARQ report is higher than the SL priority threshold; and based on determining that the priority value of the SL HARQ report is higher than the SL priority threshold: transmit the UL data transmission; and drop or delay the SL HARQ report.

Example 19a may include the computer-readable storage medium of example 12a, wherein the instructions further configure the processor to: determine that the type of transmission is an enhanced mobile broadband (eMBB) UL data transmission; and based on determining that the type of transmission is the eMBB UL data transmission process an SL control information (SCI) corresponding to the SL HARQ report to thereby determine a priority value associated with the SL HARQ report; compare the priority value of the UL data transmission to the priority value of the SL HARQ report; and prioritize transmissions based on the comparison of the priority value of the UL data transmission to the priority value of the SL HARQ report.

Example 20a may include the computer-readable storage medium of example 19a, wherein the instructions further configure the processor to: determine that the priority value of the UL data transmission is lower than the priority value of the SL HARQ report; and based on determining that the priority value of the UL data transmission is lower than the priority value of the SL HARQ report: transmit the UL data transmission; and drop or delay the SL HARQ report.

Example 21a may include a non-transitory computer-readable storage medium, the computer-readable storage medium including instructions that when executed by a processor of a user equipment (UE) configured to determine priority of a simultaneous sidelink (SL) transmission and uplink (UL) transmission of the UE within a 5G New Radio (NR) network, cause the processor to: process an SL control information (SCI) corresponding to at least one of a SL hybrid automatic repeat request (HARQ) or an SL schedule request (SR) included in a UL transmission to be sent by a UE to thereby determine a priority value associated with the at least one SL HARQ or SL SR, wherein the UL transmission does not comprise physical random access channel (PRACH), physical uplink control channel (PUSCH) scheduled by random access response (RAR) UL grant, or ultra-reliable low latency communications (URLLC) traffic; process an SCI of an SL transmission to be sent by the UE simultaneously with the UL transmission to thereby determine a priority value associated with the SL transmission; compare the priority value of the at least one SL HARQ or SL SR to the priority value of the SL transmission, and prioritize transmissions based on the comparison of priority values.

Example 22a may include the computer-readable storage medium of example 21a, wherein the instructions further configure the processor to: based on comparing the priority values, determine that the at least one SL HARQ or SL SR is a higher priority than the SL transmission; and in response to determining the at least one SL HARQ or SL SR is a higher priority than the SL transmission, prioritize the UL transmission over the SL transmission.

Example 23a may include the computer-readable storage medium of example 21a, wherein the instructions further configure the processor to: determine that the UL transmission is physical uplink control channel (PUCCH); based on comparing the priority values, determine that the at least one SL HARQ or SL SR is a lower priority than the SL transmission, and in response to determining the at least one SL HARQ or SL SR is a lower priority than the SL transmission, prioritize the SL transmission over the UL transmission.

Example 24a may include the computer-readable storage medium of example 21, wherein the instructions further configure the processor to: determine that the UL transmission is PUSCH, includes either the SL HARQ or the SL SR, and does not include other uplink data; based on comparing the priority values, determine that the SL HARQ or the SL SR is a lower priority than the SL transmission; and in response to determining the SL HARQ or the SL SR is a lower priority than the SL transmission, prioritize the SL transmission over the UL transmission.

Example 1b may include an apparatus comprising means to perform one or more elements of a method described in or related to any of the methods or processes described herein.

Example 2b may include one or more non-transitory computer-readable media comprising instructions to cause an electronic device, upon execution of the instructions by one or more processors of the electronic device, to perform one or more elements of a method described in or related to any of the above Examples, or any other method or process described herein.

Example 3b may include an apparatus comprising logic, modules, or circuitry to perform one or more elements of a method described in or related to any of the above Examples, or any other method or process described herein.

Example 4b may include a method, technique, or process as described in or related to any of the above Examples, or portions or parts thereof.

Example 5b may include an apparatus comprising: one or more
processors and one or more computer-readable media comprising instructions that, when executed by the one or more
processors, cause the one or more processors to perform the method, techniques, or process as described in or related to any of the above Examples, or portions thereof.

Example 6b may include a signal as described in or related to any of the above Examples, or portions or parts thereof.

Example 7b may include a datagram, packet, frame, segment, protocol data unit (PDU), or message as described in or related to any of the above Examples, or portions or parts thereof, or otherwise described in the present disclosure.

Example 8b may include a signal encoded with data as described in or related to any of the above Examples, or portions or parts thereof, or otherwise described in the present disclosure.

Example 9b may include a signal encoded with a datagram, packet, frame, segment, PDU, or message as described in or related to any of the above Examples, or portions or parts thereof, or otherwise described in the present disclosure.

Example 10b may include an electromagnetic signal carrying computer-readable instructions, wherein execution of the computer-readable instructions by one or more processors is
to cause the one or more processors to perform the method, techniques, or process as describ ed in or related to any of the above Examples, or portions thereof,

Example 11b may include a computer program comprising instructions, wherein execution of the program by a processing element is to cause the processing element to carry out the method, techniques, or process as described in or related to any of the above Examples, or portions thereof.

Example 12b may include a signal in a wireless network as shown and described herein.

Example 13b may include a method of communicating in a wireless network as shown and described herein.

Example 14b may include a system for providing wireless communication as shown and described herein.

Example 15b may include a device for providing wireless communication as shown and described herein.

Any of the above described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

Aspects of the invention are disclosed in the following numbered clauses:
1. A method of determining priority of a simultaneous sidelink (SL) transmissi on and uplink (UL) transmission of a user equipment (UE) within a 5G New Radio (NR) network, the method comprising:
   processing an SL control information (SCI) corresponding to at least one of a SL hybrid automatic repeat request (HARQ) or an SL schedule request (SR) included in a UL transmission to be sent by a UE to thereby determine a priority value associated with the at least one SL HARQ or SL SR, wherein the UL transmission does not comprise physical random access channel (PRACH), physical uplink control channel (PUSCH) scheduled by random access response (RAR) UL grant, or ultra-reliable low latency communications (URLLC) traffic;
   processing an SCI of an SL transmission to be sent by the UE simultaneously with the UL transmission to thereby determine a priority value associated with the SL transmission;
   comparing the priority value of the at least one SL HARQ or SL SR to the priority value of the SL transmission; and
   prioritizing transmissions based on the comparison of priority values.
2. The method of clause 1, further comprising:
   based on comparing the priority values, determining that the at least one SL HARQ or SL SR is a higher priority than the SL transmission; and
   in response to determining the at least one SL HARQ or SL SR is a higher priority than the SL transmission, prioritizing the UL transmission over the SL transmission.
3. The method of clause 1, further comprising:
   determining that the UL transmission is physical uplink control channel (PUCCH);
   based on comparing the priority values, determining that the at least one SL HARQ or SL SR is a lower priority than the SL transmission; and
   in response to determining the at least one SL HARQ or SL SR is a lower priority than the SL transmission, prioritizing the SL transmission over the UL transmission.
4. The method of clause 1, further comprising:
   determining that the UL transmission is PUSCH, includes either the SL HARQ or the SL SR, and does not include other uplink data;
   based on comparing the priority values, determining that the SL HARQ or the SL SR is a lower priority than the SL transmission; and
   in response to determining the SL HARQ or the SL SR is a lower priority than the SL transmission, prioritizing the SL transmission over the UL transmission.
5. An apparatus of a user equipment (UE), comprising:
   one or more processors configured to:
      identify a radio interface (Uu) uplink (UL) control information (UCI) transmission to be sent by the UE and a sidelink (SL) hybrid automatic repeat request (HARQ) report to be sent by the UE;
      determine a priority value of the Uu UCI transmission;
      based at least partially on the determined priority value, determine a type of transmission associated with the Uu UCI transmission; and
      based on the determined type of transmission associated with the UL transmission; prioritize transmissions of the UE; and
   a memory configured to store the Uu UCI and the SL HARQ report.
6. The apparatus of clause 5, wherein the one or more processors are further configured to:
   determine that the type of transmission is an ultra-reliable low latency communications (URLLC) UCI transmission; and
   based on determining that the type of transmission is the URLLC UCI transmission:
      transmit the Uu UCI transmission; and
      drop the SL HARQ report.
7. The apparatus of clause 6, wherein the URRLC UCI transmission comprises one of a URLLC downlink HARQ-ACK, a channel state information (CSI) report, or a scheduling request (SR).
8. The apparatus of claim 5, wherein the one or more processors are further configured to:
   determine that the type of transmission is an enhanced mobile broadband (eMBB) UCI transmission; and
   based on determining that the type of transmission is the eMBB UCI transmission:
      process an SL control information (SCI) corresponding to the SL HARQ report to thereby determine a priority value associated with the SL HARQ report;
      compare the priority value associated with the SL HARQ report to a priority threshold; and
      prioritize transmissions based on the comparison of the priority value of the SL HARQ report to the priority threshold.
9. The apparatus of clause 8, wherein the one or more processors are further configured to:
   based on comparing the priority value associated with the SL HARQ report to the priority threshold, determine that the priority value is lower than the priority threshold; and
   based on determining that the priority value is lower than the priority threshold:
      transmit the SL HARQ report; and
      drop the eMBB UCI transmission.
10. The apparatus of clause 8, wherein the one or more processors are further configured to:
   based on comparing the priority value associated with the SL HARQ report to the priority threshold, determine that the priority value is higher than the priority threshold; and
   based on determining that the priority value is higher than the priority threshold:
      transmit the eMBB UCI transmission; and
      drop the SL HARQ report.
11. The apparatus of clause 8, wherein the one or more processors are further configured to:
   identify at least one additional SL HARQ report to be sent by the UE;
   process an SCI corresponding to each of the at least one additional SL HARQ report to thereby determine a priority value associated with each of the at least one additional SL HARQ report; and
   use the SCI corresponding to the SL HARQ report and each of the at least one additional HARQ report that has the lowest priority value when comparing to the priority threshold.
12. A computer-readable storage medium, the computer-readable storage medium including instructions that when executed by a processor of a user equipment (UE) configured to determine priority of simultaneous transmissions of the user equipment (UE) on a physical uplink control channel (PUSCH) within a 5G New Radio (NR) network, cause the processor to:
   identify a sidelink (SL) hybrid automatic repeat request (HARQ) report to be multiplexed with an uplink (UL) data transmission;
   determine a priority value of the UL data transmission;
   based at least partially on the determined UL data priority value, determine a type of transmission associated with the UL data transmission; and
   based on the determined type of transmission associated with the UL data transmission, prioritize transmissions of the UE.
13. The computer-readable storage medium of clause 12, wherein the instructions further configure the processor to:
   determine that the type of transmission is an ultra-reliable low latency communications (URLLC) UL data transmission; and
   based on determining that the type of transmission is the URLLC UL data transmission:
      send the UL data transmission; and
      drop the SL HARQ report.
14. The computer-readable storage medium of clause 12, wherein the instructions further configure the processor to:
   determine that the type of transmission is an enhanced mobile broadband (eMBB) UL data transmission; and
   based on determining that the type of transmission is the eMBB UL data transmission:
      compare the priority value of the UL data transmission to a UL priority threshold; and
      prioritize transmissions of the UE based on the comparison of the priority value of the UL data transmission to the UL priority threshold.
15. The computer-readable storage medium of clause 14, wherein the instructions further configure the processor to:
   determine that the priority value of the UL data transmission is lower than the UL priority threshold; and
   based on determining that the priority value of the UL data transmission is lower than the UL priority threshold:
      transmit the UL data transmission; and
      drop or delay the SL HARQ report
16. The computer-readable storage medium of clause 14, wherein the instructions further configure the processor to:
   determine that the priority value of the UL data transmission is higher than the UL priority threshold, and
   based on determining that the priority value of the UL data transmission is higher than the UL priority threshold:
      process an SL control information (SCI) corresponding to the SL HARQ report to thereby determine a priority value associated with the SL HARQ report;
      compare the priority value of the SL HARQ report to an SL priority threshold; an d
      prioritize transmissions based on the comparison of the priority value of the SL HARQ report to the SL priority threshold.
17. The computer-readable storage medium of clause 16, wherein the instructions further configure the processor to:
   determine that the priority value of the SL HARQ report is lower than the SL priority threshold; and
   based on determining that the priority value of the SL HARQ report is lower than the SL priority threshold:
      transmit the SL HARQ report; and
      drop or delay the UL data transmission.
18. The computer-readable storage medium of clause 16, wherein the instructions further configure the processor to:
   determine that the priority value of the SL HARQ report is higher than the SL priority threshold; and
   based on determining that the priority value of the SL HARQ report is higher than the SL priority threshold:
      transmit the UL data transmission; and
      drop or delay the SL HARQ report.
19. The computer-readable storage medium of clause 12, wherein the instructions further configure the processor to:
   determine that the type of transmission is an enhanced mobile broadband (eMBB) UL data transmission; and
   based on determining that the type of transmission is the eMBB UL data transmission:
      process an SL control information (SCI) corresponding to the SL HARQ report to thereby determine a priority value associated with the SL HARQ report;
      compare the priority value of the UL data transmission to the priority value of the SL HARQ report; and
      prioritize transmissions based on the comparison of the priority value of the UL data transmission to the priority value of the SL HARQ report.
20. The computer-readable storage medium of clause 19, wherein the instructions further configure the processor to:
   determine that the priority value of the UL data transmission is lower than the priority value of the SL HARQ report; and
   based on determining that the priority value of the UL data transmission is lower than the priority value of the SL HARQ report:
      transmit the UL data transmission, and
      drop or delay the SL HARQ report.
21. A non-transitory computer-readable storage medium, the computer-readable storage medium including instructions that when executed by a processor of a user equipment (UE) configured to determine priority of a simultaneous sidelink (SL) transmission and uplink (UL) transmission of the UE within a 5G New Radio (NR) network, cause the processor to:
   process an SL control information (SCI) corresponding to at least one of a SL hybrid automatic repeat request (HARQ) or an SL schedule request (SR) included in a UL transmission to be sent by a UE to thereby determine a priority value associated with the at least one SL HARQ or SL SR, wherein the UL transmission does not comprise physical random access channel (PRACH), physical uplink control channel (PUSCH) scheduled by random access response (RAR) UL grant, or ultra-reliable low latency communications (URLLC) traffic;
   process an SCI of an SL transmission to be sent by the UE simultaneously with the UL transmission to thereby determine a priority value associated with the SL transmission;
   compare the priority value of the at least one SL HARQ or SL SR to the priority value of the SL transmission; and
   prioritize transmissions based on the comparison of priority values.
22. The computer-readable storage medium of clause 21, wherein the instructions further configure the processor to:
   based on comparing the priority values, determine that the at least one SL HARQ or SL SR is a higher priority than the SL transmission; and
   in response to determining the at least one SL HARQ or SL SR is a higher priority than the SL transmission, prioritize the UL transmission over the SL transmission.
23. The computer-readable storage medium of clause 21, wherein the instructions further configure the processor to:
   determine that the UL transmission is physical uplink control channel (PUCCH);
   based on comparing the priority values, determine that the at least one SL HARQ or SL SR is a lower priority than the SL transmission; and
   in response to determining the at least one SL HARQ or SL SR is a lower priority than the SL transmission, prioritize the SL transmission over the UL transmission.
24. The computer-readable storage medium of clause 21, wherein the instructions further configure the processor to:
   determine that the UL transmission is PUSCH, includes either the SL HARQ or the SL SR, and does not include other uplink data,
   based on comparing the priority values, determine that the SL HARQ or the SL SR is a lower priority than the SL transmission; and
   in response to determining the SL HARQ or the SL SR is a lower priority than the SL transmission, prioritize the SL transmission over the UL transmission.

## Claims

1. An apparatus of a user equipment (UE), comprising:
one or more processors configured to:
identify a radio interface (Uu) uplink (UL) control information (UCI) transmission to be sent by the UE and a sidelink (SL) hybrid automatic repeat request (HARQ) report to be sent by the UE;
determine a priority value of the Uu UCI transmission;
based at least partially on the determined priority value, determine a type of transmission associated with the Uu UCI transmission; and
based on the determined type of transmission associated with the UL transmission, prioritize transmissions of the UE; and
a memory configured to store the Uu UCI and the SL HARQ report.

2. The apparatus of claim 1, wherein the one or more processors are further configured to:
determine that the type of transmission is an ultra-reliable low latency communications (URLLC) UCI transmission; and
based on determining that the type of transmission is the URLLC UCI transmission:
transmit the Uu UCI transmission; and
drop the SL HARQ report.

3. The apparatus of claim 2, wherein the URRLC UCI transmission comprises one of a URLLC downlink HARQ-ACK, a channel state information (CSI) report, or a scheduling request (SR).

4. The apparatus of claim 1, wherein the one or more processors are further configured to:
determine that the type of transmission is an enhanced mobile broadband (eMBB) UCI transmission; and
based on determining that the type of transmission is the eMBB UCI transmission:
process an SL control information (SCI) corresponding to the SL HARQ report to thereby determine a priority value associated with the SL HARQ report;
compare the priority value associated with the SL HARQ report to a priority threshold; and
prioritize transmissions based on the comparison of the priority value of the SL HARQ report to the priority threshold.

5. The apparatus of claim 4, wherein the one or more processors are further configured to:
based on comparing the priority value associated with the SL HARQ report to the priority threshold, determine that the priority value is lower than the priority threshold; and
based on determining that the priority value is lower than the priority threshold:
transmit the SL HARQ report; and
drop the eMBB UCI transmission.

6. The apparatus of claim 4, wherein the one or more processors are further configured to:
based on comparing the priority value associated with the SL HARQ report to the priority threshold, determine that the priority value is higher than the priority threshold; and
based on determining that the priority value is higher than the priority threshold:
transmit the eMBB UCI transmission; and
drop the SL HARQ report.

7. The apparatus of claim 4, wherein the one or more processors are further configured to:
identify at least one additional SL HARQ report to be sent by the UE;
process an SCI corresponding to each of the at least one additional SL HARQ report to thereby determine a priority value associated with each of the at least one additional SL HARQ report; and
use the SCI corresponding to the SL HARQ report and each of the at least one additional HARQ report that has the lowest priority value when comparing to the priority threshold.

8. A method for a user equipment (UE), the method comprising:
identifying a radio interface (Uu) uplink (UL) control information (UCI) transmission to be sent by the UE and a sidelink (SL) hybrid automatic repeat request (HARQ) report to be sent by the UE;
determining a priority value of the Uu UCI transmission;
based at least partially on the determined priority value, determining a type of transmission associated with the Uu UCI transmission; and
based on the determined type of transmission associated with the UL transmission, prioritizing transmissions of the UE; and

9. The method of claim 8, further comprising:
determining that the type of transmission is an ultra-reliable low latency communications (URLLC) UCI transmission; and
based on determining that the type of transmission is the URLLC UCI transmission:
transmitting the Uu UCI transmission; and
dropping the SL HARQ report.

10. The method of claim 9, wherein the URRLC UCI transmission comprises one of a URLLC downlink HARQ-ACK, a channel state information (CSI) report, or a scheduling request (SR).

11. The method of claim 8, further comprising:
determining that the type of transmission is an enhanced mobile broadband (eMBB) UCI transmission; and
based on determining that the type of transmission is the eMBB UCI transmission:
processing an SL control information (SCI) corresponding to the SL HARQ report to thereby determine a priority value associated with the SL HARQ report;
comparing the priority value associated with the SL HARQ report to a priority threshold; and
prioritizing transmissions based on the comparison of the priority value of the SL HARQ report to the priority threshold.

12. The method of claim 11, further comprising:
based on comparing the priority value associated with the SL HARQ report to the priority threshold, determining that the priority value is lower than the priority threshold; and
based on determining that the priority value is lower than the priority threshold:
transmitting the SL HARQ report; and
dropping the eMBB UCI transmission.

13. The method of claim 11, further comprising:
based on comparing the priority value associated with the SL HARQ report to the priority threshold, determining that the priority value is higher than the priority threshold; and
based on determining that the priority value is higher than the priority threshold:
transmitting the eMBB UCI transmission; and
dropping the SL HARQ report.

14. The method of claim 11, further comprising:
identifying at least one additional SL HARQ report to be sent by the UE;
processing an SCI corresponding to each of the at least one additional SL HARQ report to thereby determine a priority value associated with each of the at least one additional SL HARQ report; and
using the SCI corresponding to the SL HARQ report and each of the at least one additional HARQ report that has the lowest priority value when comparing to the priority threshold.

15. A computer-readable media comprising instructions to cause an electronic device, upon execution of the instructions by one or more processors of the electronic device, to perform the method of any of claim 8 to claim 14.
